# EUROPEAN PATENT APPLICATION

(11) **EP 4 776 398 A1**
(43) Date of publication of application: **15.07.2026**
(21) Application number: 24862440.5
(22) Date of filing: 16.07.2024
(51) Int. Cl.: H01M 50/204, F16L 59/02, H01M 10/613, H01M 10/658, H01M 10/6557

(54) **HEAT TRANSFER SUPPRESSION SHEET, HEAT TRANSFER SUPPRESSION MEMBER, AND BATTERY PACK**

(30) Priority: 07.09.2023 JP 2023145489
(71) Applicant: IBIDEN CO., LTD., Ogaki-shi, Gifu 503-8604 (JP)
(72) Inventor: KINO, Daisuke, Ibi-gun, Gifu 501-0695 (JP); HASHIZUME, Shohei, Ibi-gun, Gifu 501-0695 (JP)
(74) Representative: Hoffmann Eitle
(86) International application number: PCT/JP2024/025462
(87) International publication number: WO 2025/052784

(57) **Abstract**

To provide a heat transfer suppression sheet capable of maintaining a heat transfer suppression effect even when a resin base material is burned out by intense heat or a flame from a battery cell undergoing thermal runaway. Also to provide a battery pack with higher safety capable of maintaining a heat transfer suppression effect even when a resin base material is burned out by intense heat or a flame from a battery cell undergoing thermal runaway. A heat transfer suppression sheet (1) contains a resin base material (10), first inorganic particles (20), and second inorganic particles (30) having a melting point lower than that of the first inorganic particles (20). **In** addition, a heat transfer suppression member (60) includes a heat insulation layer (50) on a surface of the heat transfer suppression sheet (1). Further, in a battery pack (100), the heat transfer suppression sheet (1) or the heat transfer suppression member (60) is interposed between battery cells (110), and the battery cells (110) are connected in series or in parallel.

## Description

### TECHNICAL FIELD

The present invention relates to a heat transfer suppression sheet and a heat transfer suppression member for use in a battery pack. The present invention also relates to a battery pack including the heat transfer suppression sheet or the heat transfer suppression member.

### BACKGROUND ART

In recent years, from the viewpoint of environmental protection, an electric vehicle or a hybrid vehicle driven by an electric motor has been actively developed. The electric vehicle or the hybrid vehicle is equipped with a battery pack in which a plurality of battery cells are connected in series or in parallel to serve as a power source for a driving electric motor.

A lithium ion secondary battery, which has higher capacity and is capable of higher output than a lead-acid battery, a nickel-metal hydride battery, or the like, is mainly used for the battery cells. In the case where a certain battery cell suddenly rises in temperature due to an internal short circuit or overcharging of the battery, and then causes thermal runaway that continues to generate heat, intense heat or a flame from the battery cell undergoing thermal runaway may propagate to other adjacent battery cells. Therefore, a heat transfer suppression sheet is interposed between the battery cells to prevent the transfer and spread of the thermal runaway.

As a heat transfer suppression sheet, for example, Patent Literature 1 describes a heat insulation material composed of a urethane resin composition containing a urethane resin, a trimerization catalyst, and a flame retardant. When a refractory material is heated by intense heat or a flame from the battery cell undergoing thermal runaway, the refractory material expands to block a space between the battery cells, thereby preventing or delaying heat transfer and fire spreading to the adjacent battery cell.

### CITATION LIST

### PATENT LITERATURE

Patent Literature 1: JP2018-206604A

### SUMMARY OF INVENTION

### TECHNICAL PROBLEM

However, in the heat transfer suppression sheet in Patent Literature 1, depending on a scale or a degree of the intense heat or the flame from the battery cell undergoing thermal runaway, it is assumed that the urethane resin, which is a base material of the heat insulation material, is burned out and does not function as the heat insulation material although the flame retardant is contained.

The present invention has been made in view of the above problems, and an object of the present invention is to provide a heat transfer suppression sheet capable of maintaining a heat transfer suppression effect even when a resin base material is burned out by intense heat or a flame from a battery cell undergoing thermal runaway. Another object of the present invention is to provide a battery pack with higher safety capable of maintaining a heat transfer suppression effect even when a resin base material is burned out by intense heat or a flame from a battery cell undergoing thermal runaway.

### SOLUTION TO PROBLEM

The above object of the present invention is achieved by the following configuration [1] relating to a heat transfer suppression sheet.
[1] A heat transfer suppression sheet containing:
   a resin base material;
   first inorganic particles; and
   second inorganic particles having a melting point lower than a melting point of the first inorganic particles.
   Preferred embodiments of the present invention relating to the heat transfer suppression sheet relate to the following [2] to [8].
[2] The heat transfer suppression sheet according to [1], in which the first inorganic particles and the second inorganic particles are dispersed in the resin base material.
[3] The heat transfer suppression sheet according to [1], in which a first heat transfer suppression sheet in which the first inorganic particles are dispersed in the resin base material and a second heat transfer suppression sheet in which the second inorganic particles are dispersed in the resin base material are stacked.
[4] The heat transfer suppression sheet according to [3], in which the first heat transfer suppression sheet and the second heat transfer suppression sheet are alternately stacked in multiple layers.
[5] The heat transfer suppression sheet according to any one of [1] to [4], further containing: an inorganic hydrate as third inorganic particles.
[6] The heat transfer suppression sheet according to [5], in which the inorganic hydrate is at least one kind selected from aluminum hydroxide (Al(OH)₃), magnesium hydroxide (Mg(OH)₂), calcium hydroxide (Ca(OH)₂), zinc hydroxide (Zn(OH)₂), iron hydroxide (Fe(OH)₂), manganese hydroxide (Mn(OH)₂), zirconium hydroxide (Zr(OH)₂), and gallium hydroxide (Ga(OH)₃).
[7] The heat transfer suppression sheet according to any one of [1] to [6], in which the melting point of the second inorganic particles is 700°C or lower.
[8] The heat transfer suppression sheet according to any one of [1] to [7], further containing: a phosphate compound.
   The above object of the present invention is achieved by the following configuration [9] relating to a heat transfer suppression member.
[9] A heat transfer suppression member including: a heat insulation layer on a surface of the heat transfer suppression sheet according to any one of [1] to [8].
   The above object of the present invention is achieved by the following configuration [10] or [11] relating to a battery pack.
[10] A battery pack, in which
   the heat transfer suppression sheet according to any one of [1] to [8] is interposed between battery cells, and
   the battery cells are connected in series or in parallel.
[11] A battery pack, in which
   the heat transfer suppression member according to [9] is interposed between battery cells with the heat transfer suppression sheet in contact with the battery cells, and
   the battery cells are connected in series or in parallel.

### ADVANTAGEOUS EFFECTS OF INVENTION

In the heat transfer suppression sheet according to the present invention, even in the case where the resin base material is burned out by receiving intense heat or a flame from a battery cell undergoing thermal runaway, the second inorganic particles having a low melting point are melted and enter between the first inorganic particles having an excellent heat resistance performance to construct a three-dimensional network, and thus an excellent heat resistance performance by the first inorganic particles is maintained, and heat transfer and fire spreading to the adjacent battery cell can be suppressed.

In addition, the heat transfer suppression member according to the present invention includes a heat insulation layer on the surface of the heat transfer suppression sheet, and a heat transfer suppression effect is further enhanced in consideration of the heat insulation performance.

Therefore, the battery pack including the heat transfer suppression sheet or the heat transfer suppression member according to the present invention has excellent safety since intense heat or a flame from the battery cell undergoing thermal runaway is more effectively suppressed from being transferred to and spreading to the adjacent battery cell.

### BRIEF DESCRIPTION OF DRAWINGS

[Fig. 1] Fig. 1 is a cross-sectional view schematically showing a heat transfer suppression sheet according to one embodiment of the present invention.
[Fig. 2] Fig. 2 is a cross-sectional view schematically showing a heat transfer suppression sheet according to another embodiment of the present invention.
[Fig. 3] Fig. 3 is a cross-sectional view schematically showing a heat transfer suppression member according to one embodiment of the present invention.
[Fig. 4] Fig. 4 is a schematic diagram showing a battery pack (No. 1) including the heat transfer suppression sheet according to the present invention shown in Fig. 1.
[Fig. 5] Fig. 5 is a schematic diagram showing a battery pack (No. 2) including the heat transfer suppression member according to the present invention shown in Fig. 3.

### DESCRIPTION OF EMBODIMENTS

Hereinafter, embodiments of the present invention will be specifically described. Note that, the present invention is not limited to the embodiments described below, and can be freely changed and implemented without departing from the gist of the present invention.

### [Heat Transfer Suppression Sheet]

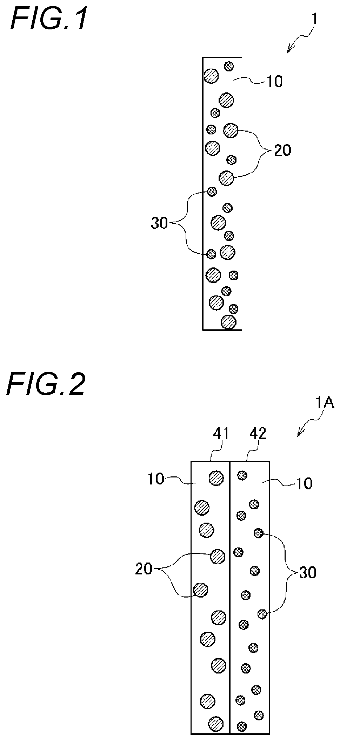

Fig. 1 is a cross-sectional view schematically showing a heat transfer suppression sheet 1 according to one embodiment of the present invention. As shown, in the heat transfer suppression sheet 1, first inorganic particles 20 and second inorganic particles 30 having a melting point lower than that of the first inorganic particles 20 are dispersed in a resin base material (or also referred to as an "organic base material") 10.

The kind of a resin in the resin base material 10 is not limited, and since a temperature of a battery cell may rise to near 150°C during charging and discharging, the resin base material 10 needs to have heat resistance enough not to melt at the temperature rise of the battery cell. In addition, the resin also needs to have followability to expansion and contraction accompanying the charging and discharging of the battery cell. In consideration of these properties, preferred examples of the resin include a urethane resin, a silicone resin, a fluororesin, a polyether ether ketone resin, a polyamide-imide resin, a polyimide resin, and a polycarbonate resin.

In addition, the resin also preferably has an elastic function in order to enhance adhesion to the battery cell, and for this purpose, a foaming agent or a foaming aid may be further contained.

The first inorganic particles 20 are particles composed of an inorganic material having a higher melting point and higher heat resistance than those of the second inorganic particles 30, and is preferably, for example, oxide particles. As the oxide particles, at least one kind of particles selected from silica (SiO₂), titania (TiO₂), zirconia (ZrO₂), zircon (ZrSiO₄), barium titanate (BaTiO₃), zinc oxide (ZnO), and alumina (Al₂O₃) can be used. Particularly, silica is a component having a high heat insulation property, and titania is a component having a high refractive index compared to other metal oxides, and has a high effect of diffusely reflecting light and blocking radiant heat in a high temperature range of 500°C or higher. Therefore, silica and titania are most preferably used as the oxide particle.

In addition, inorganic hydrate particles can be blended as third inorganic particles (not shown) to substitutes for some of the first inorganic particles 20. The inorganic hydrate exhibits a so-called "heat absorption effect" that the inorganic hydrates receive intense heat from a battery cell undergoing thermal runaway, thermally decomposes when reaching a thermal decomposition start temperature or higher, releases crystal water thereof, and lowers the temperature of the battery cell and surroundings. In addition, after the crystal water is released, the inorganic hydrate instantaneously forms an oxide, and this oxide is a porous material and exhibits a heat insulation effect by innumerable air pores.

Specific examples of the inorganic hydrate include aluminum hydroxide (Al(OH)₃), magnesium hydroxide (Mg(OH)₂), calcium hydroxide (Ca(OH)₂), zinc hydroxide (Zn(OH)₂), iron hydroxide (Fe(OH)₂), manganese hydroxide (Mn(OH)₂), zirconium hydroxide (Zr(OH)₂), and gallium hydroxide (Ga(OH)₃).

For example, aluminum hydroxide has about 35% crystal water, and as shown in the following formula, thermally decomposes to release the crystal water and exhibits a heat absorption effect. Then, after releasing the crystal water, aluminum hydroxide forms alumina (Al₂O₃), which is a porous material, and functions as a heat insulation material.

2Al(OH)₃ → Al₂O₃ + 3H₂O

Note that, in the battery cell undergoing thermal runaway, the temperature rapidly rises to a temperature of higher than 200°C, and depending on the kind of the battery, the temperature may continue to rise to at least around 700°C, in some cases, to around 1,000°C, and further to a higher temperature. The thermal decomposition start temperature of the above inorganic hydrate is about 200°C for aluminum hydroxide, is about 330°C for magnesium hydroxide, is about 580°C for calcium hydroxide, is about 200°C for zinc hydroxide, is about 350°C for iron hydroxide, is about 300°C for manganese hydroxide, is about 300°C for zirconium hydroxide, and is about 300°C for gallium hydroxide. All of these almost overlap the temperature range of the rapid temperature rise of the battery cell undergoing thermal runaway, and can effectively prevent the temperature rise. Therefore, these are preferred inorganic hydrates.

The second inorganic particles 30 are particles composed of an inorganic material having a melting point lower than that of the first inorganic particles 20. Therefore, although it may be selected according to the kind of the first inorganic particles 20, particles referred to as a low melting point glass are preferred.

The kind of the low melting point glass is not particularly limited, and examples thereof include a soda-lime glass, an alkali-free glass, a borosilicate glass, a potash glass, a crystal glass, a titanium crystal glass, a barium glass, a strontium glass, an alumina silicate glass, a soda-zinc glass, a soda-barium glass, and a vanadium glass (V₂O₅). Examples of the borosilicate glass include a SiO₂-B₂O₃-ZnO-based glass and a SiO₂-B₂O₃-Bi₂O₃-based glass. The crystal glass is a glass containing PbO, and examples thereof include a SiO₂-PbO-based glass, a SiO₂-PbO-B₂O₃-based glass, and a SiO₂-B₂O₃-PbO-based glass. Examples of the barium glass include a BaO-SiO₂-based glass. Note that, considering the environment, a "lead-free glass" is preferred.

The heat transfer suppression sheet 1 preferably further contains a flame retardant in addition to the resin base material 10, the first inorganic particles 20, and the second inorganic particles 30. When a flame retardant is contained, flame retardancy of the heat transfer suppression sheet 1 is enhanced. Note that, the flame retardant is not particularly limited, and a halogen-based flame retardant, a phosphorus-based flame retardant, an antimony-based flame retardant, or the like can be appropriately selected and used. A phosphorus-based flame retardant is preferred, and among them, a phosphate compound is preferred.

The heat transfer suppression sheet 1 contains the above components, and is interposed between battery cells in a battery pack. Then, in the case where thermal runaway is occurred in a certain battery cell, intense heat or a flame is transferred to the heat transfer suppression sheet 1, and at this time, the resin base material 10 may be burned out.

However, even when the resin base material 10 is burned out, a melt of the second inorganic particles 30 having a lower melting point flows between the first inorganic particles 20 having higher heat resistance and functions as a binder (binding material) that binds the first inorganic particles 20 to each other, and a three-dimensional network is constructed by the first inorganic particles 20.

In addition, since a time for constructing the network by the first inorganic particles 20 is preferably short, the melting point (note that, softening point in the case of glass particles) of the second inorganic particles 30 is preferably low, and is preferably 700°C or lower, more preferably 500°C or lower, and still more preferably 400°C or lower. However, when the melting point of the second inorganic particles 30 is too low, in addition to causing problems such as softening during normal use of the battery cell, a viscosity during melting is too low, and it is difficult to construct and maintain the network by the first inorganic particles 20, so that the melting point is preferably 200°C or higher.

Then, with the network of the first inorganic particles 20, heat transfer and fire spreading to adjacent battery cells are prevented.

In order to more effectively construct the network by the first inorganic particles 20, a blending amount of the first inorganic particles 20 in the heat transfer suppression sheet 1 is preferably 70 vol% to 95 vol%, and more preferably 80 vol% to 90 vol% with respect to a total amount of the first inorganic particles 20 and the second inorganic particles 30 to be blended. Note that, in the case of further blending the third inorganic particles (inorganic hydrate), a blending amount thereof is an amount that substitutes for some of the first inorganic particles 20.

Note that, an average particle diameter of the first inorganic particles 20 is not particularly limited, and even with the same mass, the larger the particle diameter, the smaller the number of particles and the larger a particle interval, and thus it is difficult to construct the network by the first inorganic particles 20. The average particle diameter of the first inorganic particles 20 is preferably 10 nm to 1,000 nm, and more preferably 10 nm to 100 nm. In addition, in the case of blending the third inorganic particles (inorganic hydrate), it is preferable that the third inorganic particles have a particle diameter similar to that of the first inorganic particles 20.

In order to easily construct the network by the first inorganic particles 20, a blending amount of the second inorganic particles 30 in the heat transfer suppression sheet 1 is preferably 5 vol% to 30 vol%, and more preferably 10 vol% to 20 vol% with respect to the total amount of the first inorganic particles 20 and the second inorganic particles 30 to be blended.

Note that, an average particle diameter of the second inorganic particles 30 is not particularly limited, and the second inorganic particles 30 preferably have a small diameter since the larger the number of the second inorganic particles 30, the more easily a melt of the second inorganic particles 30 flows between the first inorganic particles 20. Even with the same mass, the smaller the particle diameter, the larger the number of particles, and the shorter the time for all small-diameter particles to melt as compared with large-diameter particles, so that the small diameter particles preferably function as a binder. The average particle diameter of the second inorganic particles 30 is preferably 10 nm to 1,000 nm, and more preferably 10 nm to 100 nm.

The heat transfer suppression sheet 1 can be obtained by adding the first inorganic particles 20 and the second inorganic particles 30, and if necessary, a foaming agent, a foaming aid, a flame retardant, and the like to the resin to be the resin base material 10 and kneading them. However, in the case where a difference in specific gravity between the first inorganic particles 20 and the second inorganic particles 30 is large, the first inorganic particles 20 and the second inorganic particles 30 may be unevenly distributed in the resin base material 10. Therefore, as shown in Fig. 2, a first heat transfer suppression sheet 41 in which the first inorganic particles 20 are dispersed in the resin base material 10 and a second heat transfer suppression sheet 42 in which the second inorganic particles 30 are dispersed in the resin base material 10 may be stacked to form one heat transfer suppression sheet 1A.

In such a heat transfer suppression sheet 1A, the resin base material 10 in the first heat transfer suppression sheet 41 and the resin base material 10 in the second heat transfer suppression sheet 42 are burned out substantially simultaneously. Then, since the first inorganic particles 20 and the second inorganic particles 30 are not unevenly distributed, the melt of the second inorganic particles 30 in the second heat transfer suppression sheet 42 more uniformly flows between the first inorganic particles 20 in the first heat transfer suppression sheet 41. Therefore, since the resin base material 10 in the first heat transfer suppression sheet 41 and the resin base material 10 of the second heat transfer suppression sheet 42 have the same manner of burning out, it is preferable that the resin kinds are the same.

In addition, the heat transfer suppression sheet 1A has a two-layer structure including the first heat transfer suppression sheet 41 and the second heat transfer suppression sheet 42 in Fig. 2, but may have a multilayer structure in which the first heat transfer suppression sheet 41 and the second heat transfer suppression sheet 42 are alternately stacked (not shown).

Note that, in the above production method, the third inorganic particles (inorganic hydrate) can substitutes for some of the first inorganic particles 20.

### [Heat Transfer Suppression Member]

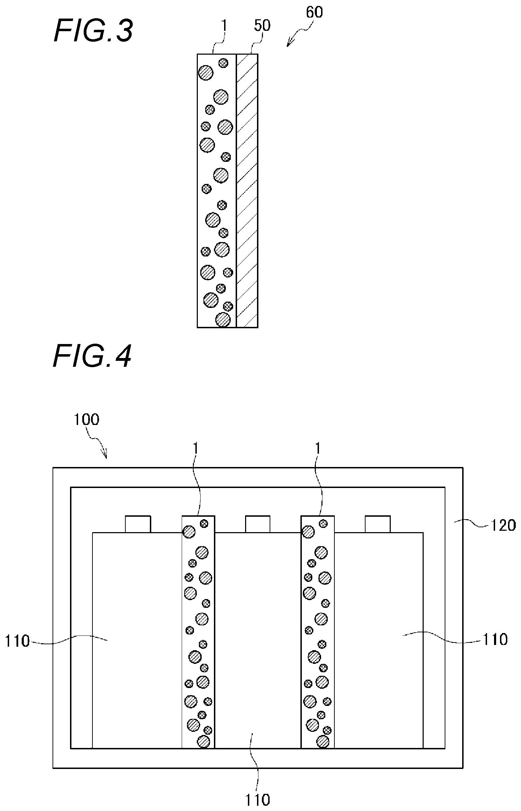

The heat transfer suppression sheet 1 or the heat transfer suppression sheet 1A may be used as a heat transfer suppression member by attaching (or stacking) a heat insulation layer to a surface thereof. Fig. 3 shows a heat transfer suppression member 60, which is an example of the heat transfer suppression member, in which a heat insulation layer 50 is attached to one surface of the heat transfer suppression sheet 1 shown in Fig. 1. Although not shown, the heat insulation layer 50 may be attached to the heat transfer suppression sheet 1A shown in Fig. 2.

The heat transfer suppression member 60 is obtained by adding a heat insulation effect of the heat insulation layer 50 to the heat transfer suppression effect of the heat transfer suppression sheets 1 (1A), and the heat insulation performance of the heat insulation layer 50 is preferably higher, and for example, the following heat insulation material can be exemplified.

The heat insulation material can contain inorganic particles and organic fibers. In addition, the heat insulation material includes a plurality of three-dimensionally connected pores between the inorganic particles and the organic fibers. Note that, the organic fiber includes a fusion portion covering at least a portion of a surface thereof, and at least a portion of the inorganic particle is fused to the surface of the organic fiber by the fusion portion. Accordingly, the surface of the organic fiber is covered with the inorganic particle.

Since the heat insulation material formed in this manner includes the three-dimensionally connected pores, an air heat insulation effect can be obtained, and the heat insulation performance can be improved. In addition, since the heat insulation material contains the organic fibers having high flexibility, the flexibility of the heat insulation material can be improved, organic fibers are likely to be entangled with each other, and a strength of the entire heat insulation material can be improved. Further, when the pores are present, a cushioning property of the entire heat insulation material is improved. Therefore, when the battery cell expands during charging and discharging, the heat insulation material can absorb the expansion of the battery cell. Therefore, it is possible to suppress breakage of the heat insulation layer 50 containing such a heat insulation material.

In addition, it is preferable that at least some of the pores communicate with the surface of the heat insulation material and open towards the outside. When the pores are formed in this manner, even in the case where intense heat from the battery cell undergoing thermal runaway is transferred to the heat insulation layer 50 through the heat transfer suppression sheet 1 (1A), and the organic fibers and the like are decomposed, a decomposition gas does not remain inside the heat insulation material but is released to the outside through the pores. Therefore, from this viewpoint, the effect of preventing the heat insulation layer 50 from being damaged can also be obtained.

As described above, when the fusion portion on an outer peripheral surface of the organic fiber fixes the inorganic particle to the organic fiber, it is possible to obtain an effect of suppressing the inorganic particles from falling off (powder falling). Therefore, even in the case where the battery cell expands and a compressive stress or impact is applied to the heat insulation material, an effect of retaining a shape of the heat insulation material can be further enhanced, and a decrease in heat insulation effect due to compressive deformation of the heat insulation layer 50 can be prevented.

In addition, the heat insulation material preferably contains inorganic fibers. Since the inorganic fibers are less likely to decompose even at a high temperature, the inorganic fibers remain even when thermal runaway is occurred in the battery cell (is, for example, heated to 800°C or higher) and the organic fibers in the heat insulation material decompose, so that the shape of the heat insulation material can be reliably retained. In addition, since the organic fibers having flexibility tend to be entangled with the inorganic fibers, which is relatively hard, and a three-dimensional framework (aggregate), which is a three-dimensional structure having a space, is formed by the inorganic fibers and the organic fibers, the strength of the heat insulation material can be further improved.

Note that, the heat insulation material may be produced by either a wet method or a dry method.

Further, a mica sheet may be stacked on at least one of a first surface and a second surface orthogonal to a thickness direction of the heat insulation material. Mica has excellent heat resistance and insulating properties, and the mica sheet obtained by processing a material containing mica into a sheet shape also has excellent impact resistance. Therefore, in the case where the battery cell ruptures and scattered matters are generated, the heat insulation layer 50 is protected by the mica sheet, thereby being prevented from being damaged.

### [Battery Pack (No. 1)]

Fig. 4 is a schematic diagram showing a battery pack 100 including the heat transfer suppression sheet 1 shown in Fig. 1. As shown, in the battery pack 100, the heat transfer suppression sheet 1 is interposed between battery cells 110. The battery cells 110 are connected in series or in parallel by a bus bar. Although not shown, the battery cell 110 may be placed on a cooling plate (not shown). Then, the heat transfer suppression sheet 1, the battery cell 110, and the cooling plate in the case of using the cooling plate are housed in a battery case 120.

As described above, in the heat transfer suppression sheet 1, even when the resin base material 10 is burned out, the first inorganic particles 20 construct a network to suppress heat transfer, and thus safety can be ensured even when thermal runaway is occurred in a certain battery cell 110.

Note that, although not shown, the heat transfer suppression sheet 1A can also be used, and in this case, either the first heat transfer suppression sheet 41 or the second heat transfer suppression sheet 42 may be in contact with the battery cell 110.

### [Battery Pack (No. 2)]

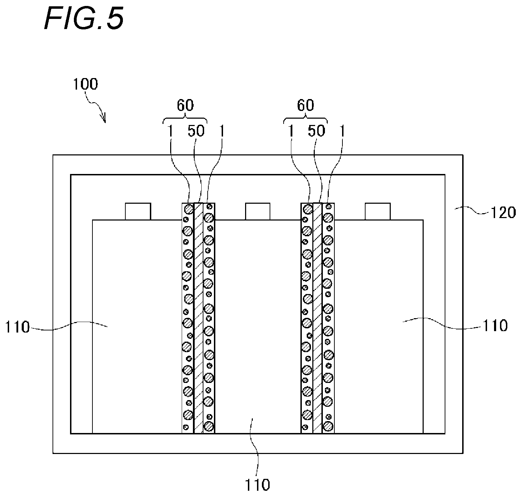

Fig. 5 is a schematic diagram showing the battery pack 100 including the heat transfer suppression member 60 shown in Fig. 3. As shown, the heat transfer suppression member 60 is interposed between the battery cells 110, and the heat transfer suppression member 60 also includes the heat transfer suppression sheet 1 on the other surface of the heat insulation layer 50, that is, includes the heat transfer suppression sheet 1 on both surfaces of the heat insulation layer 50, and the battery cells 110 are in contact with the heat transfer suppression sheet 1.

Then, battery cells 40 are connected in series or in parallel by a bus bar, and the heat transfer suppression member 60, the battery cell 110, and the cooling plate in the case of using the cooling plate are housed in the battery case 120.

Since the heat insulation effect of the heat insulation layer 50 is added by the heat transfer suppression member 60 to the heat transfer suppression effect of the heat transfer suppression sheet 1, the safety of the battery pack 100 is further enhanced.

Although various embodiments have been described above with reference to the drawings, it is needless to say that the present invention is not limited to such examples. It is apparent to those skilled in the art that various changes and modifications can be conceived within the scope of the claims, and it is understood that such changes and modifications are also encompassed within the technical scope of the present invention. In addition, the constituent elements in the above embodiments may be freely combined without departing from the gist of the present invention.

Note that, the present application is based on a Japanese patent application (Japanese Patent Application No. 2023-145489) filed on September 7, 2023, and the contents thereof are incorporated herein by reference.

### REFERENCE SIGNS LIST

1, 1A heat transfer suppression sheet
10 resin base material (organic base material)
20 first inorganic particle
30 second inorganic particle
41 first heat transfer suppression sheet
42 second heat transfer suppression sheet
50 heat insulation layer
60 heat transfer suppression member
100 battery pack
110 battery cell
120 battery case

## Claims

1. A heat transfer suppression sheet comprising:
a resin base material;
first inorganic particles; and
second inorganic particles having a melting point lower than a melting point of the first inorganic particles.

2. The heat transfer suppression sheet according to claim 1, wherein the first inorganic particles and the second inorganic particles are dispersed in the resin base material.

3. The heat transfer suppression sheet according to claim 1, wherein a first heat transfer suppression sheet in which the first inorganic particles are dispersed in the resin base material and a second heat transfer suppression sheet in which the second inorganic particles are dispersed in the resin base material are stacked.

4. The heat transfer suppression sheet according to claim 3, wherein the first heat transfer suppression sheet and the second heat transfer suppression sheet are alternately stacked in multiple layers.

5. The heat transfer suppression sheet according to any one of claims 1 to 4, further comprising:
an inorganic hydrate as third inorganic particles.

6. The heat transfer suppression sheet according to claim 5, wherein the inorganic hydrate is at least one kind selected from aluminum hydroxide (Al(OH)₃), magnesium hydroxide (Mg(OH)₂), calcium hydroxide (Ca(OH)₂), zinc hydroxide (Zn(OH)₂), iron hydroxide (Fe(OH)₂), manganese hydroxide (Mn(OH)₂), zirconium hydroxide (Zr(OH)₂), and gallium hydroxide (Ga(OH)₃).

7. The heat transfer suppression sheet according to any one of claims 1 to 4, wherein the melting point of the second inorganic particles is 700°C or lower.

8. The heat transfer suppression sheet according to any one of claims 1 to 4, further comprising:
a phosphate compound.

9. A heat transfer suppression member comprising:
a heat insulation layer on a surface of the heat transfer suppression sheet according to any one of claims 1 to 4.

10. A battery pack, wherein
the heat transfer suppression sheet according to any one of claims 1 to 4 is interposed between battery cells, and
the battery cells are connected in series or in parallel.

11. A battery pack, wherein
the heat transfer suppression member according to claim 9 is interposed between battery cells with the heat transfer suppression sheet in contact with the battery cells, and
the battery cells are connected in series or in parallel.
